(19) **Europäisches Patentamt European Patent Office Office européen des brevets**

(11) **EP 4 563 663 A1**

(12) **EUROPEAN PATENT APPLICATION**
published in accordance with Art. 153(4) EPC

(43) Date of publication:
04.06.2025 Bulletin 2025/23

(21) Application number: 23846657.7

(22) Date of filing: 28.07.2023

(51) International Patent Classification (IPC):
C08L 95/00 $^{(2006.01)}$     C08C 19/20 $^{(2006.01)}$
C08L 11/00 $^{(2006.01)}$     C08L 15/00 $^{(2006.01)}$

(52) Cooperative Patent Classification (CPC):
C08C 19/20; C08L 11/00; C08L 15/00; C08L 95/00

(86) International application number:
PCT/JP2023/027694

(87) International publication number:
WO 2024/024927 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.07.2022 JP 2022120548

(71) Applicant: Resonac Corporation
Tokyo 105-7325 (JP)

(72) Inventors:
• OHGUMA, Yuya
Tokyo 105-8518 (JP)
• SHIBUYA, Akira
Tokyo 105-8518 (JP)
• OGAWA, Noriko
Tokyo 105-8518 (JP)

(74) Representative: Strehl & Partner mbB
Maximilianstrasse 54
80538 München (DE)

(54) **ASPHALT EMULSION COMPOSITION AND METHOD FOR PRODUCING SAME**

(57) An asphalt emulsion composition containing sulfur-copolymerized chloroprene, asphalt and water, a method for producing the same, and a latex composition for modifying asphalt, containing sulfur-copolymerized chloroprene and water.

EP 4 563 663 A1

## Description

[Technical Field]

The present invention relates to an asphalt emulsion composition and a method for producing the same.

[Background Art]

Roads paved with an asphalt material are exposed to, for example, sunlight or wind and rain while in service, which causes hardening and deterioration of the roads and generation of small cracks. When rainwater permeates through these cracks, water permeates between the asphalt pavement and the roadbed below, causing the peeling of the asphalt pavement. In addition, while the asphalt pavement is in service, aggregate (for example, crushed stone) that is contained in the pavement peels off, and the pavement surface becomes rough.

As a method for rehabilitating asphalt pavements that have been damaged as described above, a chip seal method is known. The chip seal method involves spreading an asphalt emulsion on an existing asphalt pavement, then spreading aggregate and compacting it. Compacting refers to an increase in density by applying force to, for example, earth and sand or asphalt to push out the air and make the contact between particles denser.

To the asphalt emulsion that is used in the chip seal method, it is common to add a rubber elastic polymer as a modifier for the purpose of imparting force for holding aggregate (hereinafter, also referred to as "aggregate-holding property").

For example, Patent Literature 1 discloses a styrene/butadiene/styrene (SBS) block copolymer, SBR (styrene butadiene rubber), chloroprene latex, and natural rubber as modifiers.

[Citation List]

[Patent Literature]

[Patent Literature 1]
US5180428B

[Summary of Invention]

[Technical Problem]

Conventionally, asphalt emulsions that were used in chip seal applications have been modified with a rubber elastic polymer such as chloroprene latex.

However, in asphalt emulsions to which these modifiers have been added, the aggregate-holding property is still insufficient, and further improvement in the aggregate-holding property has been desired.

An object that one embodiment according to the present invention intends to achieve is to provide an asphalt emulsion composition having excellent aggregate-holding property when made into a layered structure and a method for producing the same.

[Solution to Problem]

As a result of studies, the inventors have found that the use of chloroprene latex copolymerized with sulfur in an asphalt emulsion composition significantly improves the aggregate-holding property when the asphalt emulsion composition is made into a layered structure compared with a case where conventional chloroprene latex is used for an asphalt emulsion composition.

As means for achieving the above-described object, the following aspects are included.

<1> An asphalt emulsion composition comprising: sulfur-copolymerized chloroprene, asphalt and water.
<2> The asphalt emulsion composition according to <1>, further comprising a surfactant.
<3> The asphalt emulsion composition according to <1> or <2>, wherein the sulfur-copolymerized chloroprene is a particle.
<4> The asphalt emulsion composition according to any one of <1> to <3>, wherein the asphalt is an asphalt particle.
<5> A method for producing an asphalt emulsion composition, comprising a step of mixing sulfur-copolymerized chloroprene latex and asphalt.
<6> The method for producing an asphalt emulsion composition according to <5>, wherein the asphalt is an asphalt emulsion.

<7> The method for producing an asphalt emulsion composition according to <5>, wherein the asphalt is an asphalt particle.

<8> The method for producing an asphalt emulsion composition according to any one of <5> to <7>, comprising a step of polymerizing the chloroprene monomer in the presence of 0.01 to 5.0 parts by mass of sulfur relative to 100 parts by mass of the chloroprene monomer, and water, thereby obtaining the sulfur-copolymerized chloroprene latex.

<9> The method for producing an asphalt emulsion composition according to any one of <5> to <8>, wherein a gel content of the sulfur-copolymerized chloroprene latex is 0 to 90 mass%.

<10> The method for producing an asphalt emulsion composition according to any one of <5> to <9>, wherein a content of solid content of the sulfur-copolymerized chloroprene latex relative to 100 parts by mass of solid content of the asphalt is 0.5 to 20 parts by mass.

<11> A layered structure comprising an asphalt emulsion composition produced by the production method according to any one of <5> to <10>.

<12> An asphalt emulsion composition produced by the production method according to any one of <5> to <10>.

<13> The asphalt emulsion composition according to <12>, wherein the composition forms a sea-island structure when dried.

<14> The asphalt emulsion composition according to <12> or <13>, wherein a gel content of the sulfur-copolymerized chloroprene latex is 0 to 90 mass%.

<15> The asphalt emulsion composition according to any one of <12> to <14>, wherein a content of solid content of the sulfur-copolymerized chloroprene latex relative to 100 parts by mass of solid content of an asphalt emulsion is 0.5 to 20 parts by mass.

<16> A latex composition for modifying asphalt, comprising sulfur-copolymerized chloroprene latex and water.

[Advantageous Effects of Invention]

According to one embodiment according to the present invention, an asphalt emulsion composition having excellent aggregate-holding property when made into a layered structure and a method for producing the same are provided.

[Description of Embodiments]

Hereinafter, the contents of the present invention will be described in detail. The contents of constituent features described below may be described based on typical embodiments of the present invention, but the present invention is not limited to such embodiments.

In the present specification, the term "to" indicating numerical ranges is used with a meaning of including numerical values before and after "to" as the lower limit value and the upper limit value.

In the present specification, the term "to" indicating numerical ranges means that a unit described either before or after "to" indicates the same unit, unless otherwise noted.

In the present specification, a combination of two or more preferable aspects is a more preferable aspect.

In the present specification, a total solid content refers to the total mass of all components of a composition excluding a solvent or a dispersion medium.

Hereinafter, the present invention will be described in detail.

(Asphalt emulsion composition)

An asphalt emulsion composition according to the present invention contains sulfur-copolymerized chloroprene, asphalt, and water.

The asphalt emulsion composition has the above-described constitution and thereby has excellent aggregate-holding property when made into a layered structure. The reason therefore is not clear, but is presumed as described below.

A dried film obtained by drying sulfur-copolymerized chloroprene latex has excellent tensile strength compared with a dried film obtained from non-sulfur-copolymerized chloroprene latex. It is presumed that this is because crosslinking occurs between polymer chains during a drying process using copolymerized sulfur as a crosslinking point and the film strength is improved.

The asphalt emulsion composition according to the present invention as described above contains an asphalt emulsion and sulfur-copolymerized chloroprene latex, and the composition is thus considered to have a sea-island structure in which chloroprene forms the sea portion when dried.

In addition, since the molecules of the sulfur-copolymerized chloroprene forming the sea portion integrate together by crosslinking, it is easy to form a mesh-like network having rubber elasticity throughout the entire dry residue, and it is thus presumed that rubber elasticity is imparted when the asphalt emulsion composition is made into a layered structure and the aggregate-holding property improves.

Hereinafter, the details of the sulfur-copolymerized chloroprene latex will be described.

<Sulfur-copolymerized chloroprene>

The sulfur-copolymerized chloroprene may be obtained by copolymerizing 2-chloro-1,3-butadiene monomer (hereinafter, also referred to as "chloroprene monomer") and sulfur, or may be obtained by copolymerizing a chloroprene monomer, a monomer that can be copolymerized with chloroprene, and sulfur.

The monomer that can be copolymerized with chloroprene is not particularly limited as long as the object of the present invention is not impaired, and examples thereof include 2,3-dichloro-1,3-butadiene, 1-chloro-1,3-butadiene, butadiene, isoprene, styrene, acrylonitrile, acrylic acid and esters thereof, and methacrylic acid and esters thereof. Among these, the monomer that can be copolymerized with chloroprene is preferably 2,3-dichloro-1,3-butadiene and **1-chloro-1,3-butadiene**, and more preferably 2,3-dichloro-1,3-butadiene.

The content of the monomer that can be copolymerized with chloroprene is preferably within a range of 0 to 20 parts by mass relative to 100 parts by mass of 2-chloro-1,3-butadiene (chloroprene).

One kind of monomer that can be copolymerized with chloroprene may be used alone, or two or more kinds thereof may be used in combination. When the content of the monomer that can be copolymerized with chloroprene is set to 20 parts by mass or less relative to 100 parts by mass of 2-chloro-1,3-butadiene (chloroprene), it is possible to favorably maintain the tensile strength.

The asphalt emulsion composition according to the present invention contains the sulfur-copolymerized chloroprene latex and an asphalt emulsion, and preferably forms a sea-island structure when dried. A layered structure obtained by drying the asphalt emulsion composition has regions of asphalt (island portions) present in sulfur-copolymerized chloroprene regions (sea portions), and therefore has excellent aggregate-holding property.

As drying conditions for forming the sea-island structure, the drying time is preferably one minute to 168 hours, and the drying temperature is preferably 10°C to 95°C. From the viewpoint of the sea-island structure being more easily formed, the drying time is more preferably 30 minutes to 96 hours, and still more preferably 18 to 36 hours. From the above-described viewpoint, the drying temperature is more preferably 20°C to 85°C, still more preferably 30 to 75°C, and particularly preferably 50 to 75°C.

A drying method is not particularly limited, and a well-known method can be used, for example, drying methods using warm air, hot air, or low-humidity air.

The above sulfur-copolymerized chloroprene latex can be obtained by polymerizing a chloroprene monomer in the presence of sulfur and water.

The solid content of the sulfur-copolymerized chloroprene latex is preferably 0.5 to 20 parts by mass, more preferably 0.5 to 10 parts by mass, still more preferably 1.0 to 10 parts by mass, and particularly preferably 2.0 to 5.0 parts by mass, relative to 100 parts by mass of the asphalt emulsion solid content.

One kind of sulfur-copolymerized chloroprene may be used alone, or two or more kinds thereof may be used in combination.

The shape of the sulfur-copolymerized chloroprene is not particularly limited, but is preferably a particle.

The shape of the particle is not particularly limited and may be spherical, or may be elliptical, for example, but is preferably spherical.

The z average particle diameter of the sulfur-copolymerized chloroprene is preferably 50 to 500 nm, more preferably 60 to 400 nm, and still more preferably 80 to 300 nm.

The z average particle diameter can be determined using a dynamic light scattering photometer (ZETASIZER (registered trademark) Nano-S manufactured by Malvern Panalytical Ltd.).

From the viewpoint of more easily forming the sea-island structure in which the sulfur-copolymerized chloroprene forms the sea portion, the ratio of the z average particle diameter of the sulfur-copolymerized chloroprene to the z average particle diameter of the asphalt (z average particle diameter of sulfur-copolymerized chloroprene/z average particle diameter of asphalt) is preferably 0.0025 to 1.00, more preferably 0.006 to 0.250, and still more preferably 0.0125 to 0.050.

When the z average particle diameter of the sulfur-copolymerized chloroprene/the z average particle diameter of the asphalt is within the above-described range, since the particle diameter of the sulfur-copolymerized chloroprene particle is significantly small compared with the particle diameter of the asphalt, the asphalt emulsion composition is considered to have the sea-island structure in which chloroprene forms the sea portion in the case of being dried.

In one embodiment of the present invention, a latex composition for modifying asphalt preferably contains sulfur-copolymerized chloroprene latex and water.

In another embodiment of the present invention, as the particle in the sulfur-copolymerized chloroprene latex, sulfur-copolymerized chloroprene is used.

<<Gel content>>

From the viewpoint of excellent aggregate-holding property, the gel content of the sulfur-copolymerized chloroprene latex is preferably 0 to 90 mass%, more preferably 5 to 85 mass%, and still more preferably 15 to 75 mass%.

The gel content may be determined as the content of the sulfur-copolymerized chloroprene latex, which is insoluble in tetrahydrofuran (hereinafter, also referred to as "tetrahydrofuran-insoluble component"). The tetrahydrofuran-insoluble component can be determined by a measurement method described in Examples below.

<Sulfur>

Sulfur copolymerized with the chloroprene monomer is not particularly limited, but is preferably simple substance sulfur that is substantially composed of a sulfur atom alone and is used in a crosslinking agent application for crosslinking various rubbers. The sulfur is preferably simple substance sulfur that acts on a carbon-carbon double bond portion in the monomer unit of a conjugated diene. The sulfur may be, for example, powdered sulfur, precipitated sulfur, colloidal sulfur, insoluble sulfur, or highly dispersed sulfur. The shape of the sulfur is not particularly limited and may be cyclic or chain-like.

The content of the sulfur in the sulfur-copolymerized chloroprene latex is preferably 0.01 to 5.0 mass%, more preferably 0.05 to 0.6 mass%, and still more preferably 0.1 to 0.5 mass% relative to the total mass of the sulfur-copolymerized chloroprene latex from the viewpoint of more superior aggregate-holding property when the asphalt emulsion composition is made into a layered structure.

[Method for producing sulfur-copolymerized chloroprene latex]

A method for copolymerizing the chloroprene monomer and the sulfur (method for producing sulfur-copolymerized chloroprene latex) is not particularly limited, emulsion polymerization is preferred, and industrially, aqueous emulsion polymerization is particularly preferred.

As an emulsifier for the emulsion polymerization, compounds that act as a protective colloid such as an anionic surfactant, a nonionic surfactant, and a polyvinyl alcohol are preferred.

Specific examples of the anionic surfactant include rosin acid soap, sodium salts of naphthalenesulfonic acid condensates, sodium salts of dodecylbenzenesulfonic acid, and sodium salts of dodecylsulfuric acid.

Specific examples of the nonionic surfactant include polyoxyethylene alkyl ether, sorbitan fatty acid ester, and polyoxyethylene sorbitan fatty acid ester.

In the case of using rosin acid soap as an emulsifier, the amount of the rosin acid soap used is preferably 3 to 8 parts by mass and more preferably 3 to 5 parts by mass relative to a total of 100 parts by mass of the chloroprene monomer and the monomer that can be copolymerized with the chloroprene monomer in terms of the equivalent of rosin acid.

When the amount of the rosin acid soap used is 3 parts by mass or more, favorable emulsification is possible, favorable control of the polymerization heat generation can be obtained, the generation of an aggregate can be suppressed, and favorable product appearance can be obtained. When the amount of the rosin acid soap used is 8 parts by mass or less, removal of heat during polymerization is easy, which is preferable.

A sodium salt of a naphthalenesulfonic acid condensate is sodium naphthalene sulfonate formaldehyde condensate. Addition of the sodium salt of the naphthalenesulfonic acid condensate makes it possible to suppress the occurrence of the above-described problem even in a system where emulsification is performed using 3 parts by mass or less of the rosin acid soap.

As a polymerization initiator, a usual radical polymerization initiator can be used. For example, in the case of emulsion polymerization, a usual organic or inorganic peroxide such as benzoyl peroxide, potassium persulfate, or ammonium persulfate or an azo compound such as azobisisobutyronitrile is used. Together with the radical polymerization initiator, a promotor such as anthraquinone sulfonate, potassium sulfite, or sodium sulfite can be used as appropriate.

Commonly, in the production of the sulfur-copolymerized chloroprene latex, a molecular weight regulator (chain transfer agent) may be used during polymerization for the purpose of obtaining a copolymer having a desired molecular weight and distribution.

The chain transfer agent is not particularly limited, and examples thereof include alkyl xanthogen disulfides represented by O,O-diisopropyl dithiobis(thioformate), and alkyl mercaptans represented by dodecylmercaptan.

One kind of chain transfer agent may be used alone, or two or more kinds thereof may be used in combination.

In the production of the sulfur-copolymerized chloroprene latex, when a predetermined polymerization rate is reached, it is common to add a polymerization terminator to terminate the reaction for the purpose of obtaining a polymer having a desired molecular weight and distribution. The polymerization terminator is not particularly limited, and it is possible to use a terminator that is usually used, for example, phenothiazine, para-t-butylcatechol, hydroquinone, hydroquinone monomethylether, or diethylhydroxylamine.

In the method for producing the sulfur-copolymerized chloroprene latex, the amount of the sulfur compounded is preferably 0.01 to 5.0 parts by mass, more preferably 0.05 to 0.60 parts by mass, and still more preferably 0.10 to 0.50 parts by mass relative to a total of 100 parts by mass of 2-chloro-1,3-butadiene (chloroprene) or the monomer that can be copolymerized with the chloroprene monomer.

In a case where the amount of the sulfur compounded is 0.01 parts by mass or more, the crosslinking reactivity of the sulfur-copolymerized chloroprene latex is improved. When 5.0 parts by mass or less of the sulfur is added, a favorable polymerization conversion rate can be obtained without impairing the polymerization reaction.

Regarding the sulfur used in the reaction, the total amount of sulfur used for compounding is considered to remain in the sulfur-copolymerized chloroprene latex.

In the case of using the monomer that can be copolymerized with chloroprene, regarding the amount of the monomer that can be copolymerized with chloroprene, addition within a range of 0 to 20 parts by mass relative to 100 parts by mass of 2-chloro-1,3-butadiene (chloroprene) is preferred.

The solid content of the sulfur-copolymerized chloroprene latex is preferably 0.5 to 20.0 parts by mass, more preferably 1.0 to 10.0 parts by mass, and still more preferably 2.0 to 5.0 parts by mass, relative to 100 parts by mass of the solid content of the asphalt.

<Asphalt>

The asphalt is not particularly limited, and well-known and publicly-used asphalt can be used. Examples of the asphalt include straight asphalt, blown asphalt, semi-blown asphalt, natural asphalt, modified asphalt, solvent-deasphalted asphalt, bituminous materials such as tar and pitch, A heavy oil, B heavy oil, and C heavy oil.

The content of the asphalt is preferably 50 to 99.9 mass%, more preferably 83 to 99 mass%, and still more preferably 89 to 99 mass% relative to 100 mass% of the solid content of the asphalt emulsion composition.

The content of the asphalt is preferably 30 to 74 mass%, more preferably 40 to 72 mass%, and still more preferably 50 to 70 mass% relative to 100 mass% of the asphalt emulsion composition.

One kind of asphalt may be used alone, or two or more kinds thereof may be used in combination.

The asphalt is preferably an asphalt particle. The shape of the particle is not particularly limited and may be spherical or elliptical. In particular, the shape of the asphalt particle is preferably spherical.

The z average particle diameter of the asphalt is preferably 0.5 to 20.0 $\mu$m, more preferably 1.0 to 10.0 $\mu$m, and still more preferably 2.0 to 8.0 $\mu$m.

The z average particle diameter can be determined using a dynamic light scattering photometer (ZETASIZER (registered trademark) Nano-S manufactured by Malvern Panalytical Ltd.).

<<Surfactant>>

The asphalt emulsion composition preferably further contains a surfactant.

The surfactant is not particularly limited, and examples thereof include anionic surfactants, cationic surfactants, and nonionic surfactants.

Examples of the anionic surfactants include neutralized products of tall oil and sodium hydroxide or potassium hydroxide. Examples of the cationic surfactants include hydrochlorides and phosphates of alkylamide polyamines, alkylimidazopolyamines, N-alkylpolypropylenediamines, and other amines. Examples of the nonionic surfactants include polyoxyethylene alkyl ether, sorbitan fatty acid ester, and polyoxyethylene sorbitan fatty acid ester.

Among these, the surfactant is preferably a nonionic surfactant and more preferably polyoxyethylene alkyl ether.

Examples of the polyoxyethylene alkyl ether include polyoxyethylene lauryl ether, polyoxyethylene cetyl ether, polyoxyethylene stearyl ether, polyoxyethylene oleyl ether, polyoxyethylene myristyl ether, polyoxyethylene octyldodecyl ether, polyoxyalkylene alkyl ether, polyoxyphenylene distyrenated phenyl ether, polyoxyethylene tribenzyl phenyl ether, polyoxyalkylene alkenyl ether, and polyoxyethylene nonylphenyl ether.

The surfactant may be synthetically obtained or may be a commercially available product.

Examples of the commercially available product include EMULGEN 103, 104P, 106, 108, 109P, 120, 123P, 130K, 147, 150, 210P, 220, 306P, 320P, 350, 404, 408, 409PV, 420, 430, 705, 707, 709, 1108, 1118S-70, 1135S-70, 1150S-60, 2020G-HA, 2025G, LS-106, LS-110, LS-114, MS-110, A-60, A-90, B-66, PP-290, LATEMUL PD-420, PD-430, PD-430S, PD450, SUPER SP-L10, AS-10V, AO-10V, AO-15V, TW-L120, TW-L106, TW-P120, TW-S120V, TW-S320V, TW-O120V, TW-O106V, TW-IS399C, SUPER TW-L120, 430V, 440V, 460V, MS-50, MS-60, MO-60, MS-165V, EMANON 1112, 3199V, 3299V, 3299RV, 4110, CH-25, CH-40, CH-60(K), AMIET 102, 105, 105A, 302, 320, AMINON PK-02S, L-02, and HOMOGENOL L-95 (all manufactured by Kao Corporation).

The content of the surfactant is preferably 0.1 to 10.0 parts by mass, more preferably 0.2 to 7.0 parts by mass, and still more preferably 0.3 to 6.0 parts by mass, relative to 100 parts by mass of the solid content of the asphalt emulsion composition.

One kind of surfactant may be used alone, or two or more kinds thereof may be used in combination.

<Water>

The water is not particularly limited, and examples thereof include industrial water and tap water.

The water is in an amount of preferably 25 to 400 parts by mass, more preferably 35 to 230 parts by mass, and still more preferably 40 to 150 parts by mass, relative to 100 parts by mass of the solid content of the asphalt emulsion composition.

The asphalt emulsion composition may further contain a component other than the above sulfur-copolymerized chloroprene latex, asphalt, surfactant, and water (hereinafter, also referred to as "other component").

Examples of the other component include salts such as calcium chloride, a film-forming agent, a thickening stabilizer, and a retardant for the stabilization of emulsification.

The multiple stress creep recovery (MSCR) of the asphalt emulsion composition also relies on parts by mass of the solid content of the sulfur-copolymerized chloroprene latex in the asphalt composition, but is preferably 20 to 95%, more preferably 20 to 80%, still more preferably 20% to 60%, and particularly preferably 20 to 40% from the viewpoint of excellent aggregate-holding property.

The MSCR of the asphalt emulsion composition can be determined by a method described in Examples below.

<Method for producing asphalt emulsion composition>

A method for producing an asphalt emulsion composition includes a step of mixing the sulfur-copolymerized chloroprene latex and the asphalt, and more preferably includes a step of mixing the asphalt emulsion and the sulfur-copolymerized chloroprene latex. In the method for producing an asphalt emulsion composition, the asphalt is preferably an asphalt particle.

In addition, the method for producing an asphalt emulsion composition preferably includes a step of polymerizing the chloroprene monomer in the presence of 0.01 to 5.0 parts by mass (more preferably 0.05 to 0.60 parts by mass) of sulfur relative to 100 parts by mass of the above chloroprene monomer, and water, thereby obtaining the above sulfur-copolymerized chloroprene latex (hereinafter, also referred to as "sulfur-copolymerized chloroprene latex preparation step").

The method for producing an asphalt emulsion composition preferably includes a step of adding the asphalt, the surfactant, and the water (hereinafter, also referred to as "asphalt emulsion-forming step"). In the asphalt emulsion-forming step, the order of adding the asphalt, the surfactant, and the water is not particularly limited as long as the asphalt emulsion is formed, and these may be added separately or simultaneously. For example, the asphalt emulsion may be formed by adding a variety of surfactants to the asphalt and then mixing the products with the water.

In addition, regarding the order, the asphalt may be added after the surfactant and the water are added.

As a method for mixing the sulfur-copolymerized chloroprene latex, the asphalt, the surfactant, and the water is not particularly limited, and examples thereof include a variety of well-known methods such as methods in which the components are mixed with, for example, a defoaming kneader, a dry ball mill, a dry bead mill, a blade planetary motion-type mixer, a container rotation-type planetary motion mixer, a crusher, a mortar, a homogenizer, or a colloid mill. Among these, as the above mixing method, it is preferable to emulsify using a homogenizer or a colloid mill.

The method for producing an asphalt emulsion composition may include a step of adding the other component described above, as necessary. In addition, the production method may include, for example, a step of adjusting the pH after the sulfur-copolymerized chloroprene latex preparation step.

The pH of the sulfur-copolymerized chloroprene latex after the step of adjusting the pH is preferably 1.0 to 4.5 and more preferably 1.5 to 3.5.

A pH adjuster used in the step of adjusting the pH is not particularly limited, and a well-known pH adjuster can be used.

The asphalt emulsion composition according to the present invention is preferably an asphalt emulsion composition produced by the above-described method for producing an asphalt emulsion composition, and it is more preferable that the asphalt emulsion composition produced by the above-described method for producing an asphalt emulsion composition forms a sea-island structure when dried.

It is presumed that a composition that is obtained by the method for producing an asphalt emulsion composition according to the present invention, that is, by mixing the sulfur-copolymerized chloroprene latex and the asphalt, has a sea-island structure in which chloroprene forms the sea portion.

The asphalt emulsion composition according to the present invention has excellent aggregate-holding property and thus can be suitably used for road pavement. Examples of a method for road pavement include a chip seal method, in which the asphalt emulsion composition and aggregate are layered in this order on the surface side of a road and then compacted.

In the chip seal method, a road may be paved with a single layer in which one layer of the asphalt emulsion composition and one layer of the aggregate are each formed .(seal coating) or with a multilayer in which these single-layers are laminated (armor coating).

From the viewpoint of the excellent aggregate-holding property, the above asphalt emulsion composition can be applied to, in addition to the chip seal method, for example, scrub sealing, tack coating, and binders for roadbeds (including on-site base course recycling construction, Cold In-place Recycling).

[Example]

Hereinafter, the present invention will be described with reference to Examples and Comparative Examples, but the present invention is not limited to the following Examples by any means.

<Production of asphalt emulsion>

3.50 kg of pure water warmed to 80°C was put into a container having an inner capacity of 5 liters, and 24 g of a dimethyl hydrogenated beef tallow amine (manufactured by NOF Corporation, product name: NISSAN AMINE (registered trademark) ABT) as a surfactant, 19 g of 35 mass% hydrochloric acid (manufactured by Kanto Chemical Co., Inc.), and 14 g of calcium chloride (manufactured by Kanto Chemical Co., Inc.) were charged thereinto, thereby preparing a surfactant aqueous solution. This surfactant aqueous solution and 6.50 kg of straight asphalt heated and melted at 140°C (Showa Rekisei Industries Co., Ltd., product name: SA120-150) were emulsified with a colloid mill (IKA JAPAN **K.K.,** product name: Magic LAB (registered trademark) XP) such that the asphalt emulsion production rate reached 0.5 L/minute, thereby obtaining an asphalt emulsion having a solid content of 65 mass% and a z average particle diameter of 5 $\mu$m.

<Production of sulfur-copolymerized chloroprene latex>

1.00 kg (100 parts by mass) of 2-chloro-1,3-butadiene (chloroprene) (manufactured by Tokyo Chemical Industry Co., Ltd.), 0.93 kg of pure water, 34 g of rosin acid (manufactured by Arakawa Chemical Industries, Ltd., ROSIN HTR), 1.0 g (0.10 parts by mass) of sulfur, 1.5 g of O,O-diisopropyl dithiobis(thioformate) (manufactured by Sanshin Trading Co., Ltd.), 5.9 g of potassium hydroxide, 4.9 g of sodium hydroxide, and 0.44 mg of copper sulfate were charged and emulsified using a reactor having an inner capacity of 3 liters to make the rosin acid into rosin soap (a mixture of potassium rosinate and sodium rosinate), potassium persulfate was then used as an initiator, polymerization was performed at a polymerization initial temperature of 40°C under a nitrogen gas atmosphere, when the polymerization conversion rate reached 90%, the temperature was raised up to 45°C, and polymerization was performed. The polymerization was terminated when it was confirmed a polymerization conversion rate reached 95%. Next, after that, an unreacted monomer was removed by steam distillation, 10 g of diethanol amine (manufactured by Nippon Shokubai Co., Ltd.) and 60 g of a polyoxyethylene alkyl ether 70% aqueous solution (manufactured by Kao Corporation, product name: EMULGEN 1118S-70) were added thereto, thereby obtaining sulfur-copolymerized chloroprene latex particles having a solid content of 48.0 mass%. In addition, the z average particle diameter was 128 nm.

[Example 1]

<Production of asphalt emulsion composition>

1.63 g of the sulfur-copolymerized chloroprene latex composition synthesized above having a pH adjusted to 2.0 by adding 0.5 g of 35 mass% hydrochloric acid (manufactured by Kanto Chemical Co., Inc.) thereto was added to 40 g of the asphalt emulsion (having a solid content of 65 mass%) prepared above and heated to 60°C, thereby obtaining an asphalt emulsion composition.

The amount of the sulfur-copolymerized chloroprene latex added was determined so that the solid content in the sulfur-copolymerized latex reached 3 parts by mass when the solid content in the asphalt emulsion was set to 100 parts by mass. Specifically, the amount of the sulfur-copolymerized chloroprene latex added was calculated based on the following formula.

Amount of sulfur-copolymerized chloroprene latex added = amount of asphalt emulsion (40 g) $\times$ (solid content of asphalt emulsion) $\times$ (3 parts by mass/100 parts by mass) $\div$ (solid content of sulfur-copolymerized chloroprene latex)

There are cases where hydrochloric acid is used for the purpose of adjusting pH after the preparation of the sulfur-copolymerized chloroprene latex, but hydrochloric acid is volatilized under the condition for measuring the solid content and thus have no influence on the solid content.

<Gel content rate of sulfur-copolymerized chloroprene latex>

The gel content rate of the sulfur-copolymerized chloroprene latex was determined as the content rate of the sulfur-copolymerized chloroprene latex insoluble in tetrahydrofuran (THF) (tetrahydrofuran-insoluble component). 0.5 g of the sulfur-copolymerized chloroprene latex synthesized above (the content of water in the above latex is within a range of 40 mass% to 65 mass%) was added dropwise to 100 mL of tetrahydrofuran, the mixture was shaken overnight, this THF solution was then separated with a centrifuge, and a THF-dissolved phase of the supernatant was extracted. The extracted dissolved phase was heated to 100°C, tetrahydrofuran was evaporated and dried over one hour, and the mass of the sulfur-copolymerized chloroprene latex that had been dissolved in the THF-dissolved phase was calculated. In addition, the mass of the sulfur-copolymerized chloroprene latex that had been dissolved in THF was subtracted from the mass of sulfur-copolymerized chloroprene in the sulfur-copolymerized chloroprene latex, and the result was further divided by the mass of the sulfur-copolymerized chloroprene in the sulfur-copolymerized chloroprene latex, thereby calculating the content rate of the sulfur-copolymerized chloroprene latex insoluble in tetrahydrofuran (tetrahydrofuran-insoluble component). The result is shown in Table 1.

<Preparation of sample for MSCR (multiple stress creep recovery) measurement>

40 g of the sulfur-copolymerized chloroprene latex-containing asphalt emulsion prepared above was poured into a silicone tray having a bottom area of 216 mm × 175 mm and a depth of 40 mm and spread throughout the entire tray. Next, the asphalt emulsion was dried at 23°C for 24 hours and then dried in an oven at 60°C for 24 hours to obtain a sample for multiple stress creep recovery (MSCR) measurement.

<Evaluation of aggregate-holding property>

Regarding the evaluation of the aggregate-holding property, the multiple stress creep recovery (MSCR) was measured in accordance with AASHTO (the American Association of State Highway and Transportation Officials) T350-14 and evaluated as an index of the aggregate-holding property.
Specifically, a rheometer (MCR301 manufactured by Anton Paar GmbH) was used for the measurement, and a parallel plate (diameter: 25 mm) regulated in JIS K 7244-10: 2005 was used as a measuring jig.
After the temperature of the device was set to 64°C, and sufficiently adjusted, approximately 1.0 g of the sample for measurement prepared above was set, a surplus part of the sample was then removed, and measurement was performed.
The measurement was performed in the following steps.

(1) The deformation amount (A) before the application of stress is recorded.
(2) Stress of 3.2 kPa is applied for one second, and the deformation amount (B) at that time is recorded.
(3) After the application of the stress is stopped, the sample is left for nine seconds (during this time, the sample tends to return to the origin with rubber elasticity), and the deformation amount (C) after nine seconds elapses is recorded.

The steps (1) to (3) were repeated 10 cycles.
In each cycle, the amount of return from deformation caused by the stress was calculated according to the following formula.

(Deformation amount (B) - deformation amount (C)) ÷ (deformation amount (B) - deformation amount (A)) × 100

The above formula was calculated 10 cycles, and the average was determined as the multiple stress creep recovery. As the value of the multiple stress creep recovery (MSCR) becomes higher, the aggregate-holding property can be said to be superior.
When the MSCR exceeds 20%, the aggregate-holding property can be said to be sufficient even in actual pavement.

<Particle diameter>

The z average particle diameter of a solution obtained by diluting the sulfur-copolymerized chloroprene latex or the asphalt emulsion with pure water to 0.01 to 0.1 mass% was measured with a dynamic light scattering photometer (ZETASIZER (registered trademark) Nano-S manufactured by Malvern Panalytical Ltd.).

<Polymerization conversion rate>

The polymerized emulsion was collected, and the polymerization conversion rate was calculated from the solid content after two hours of drying at 100°C.

The solid content and the polymerization conversion rate were determined according to the following formulae.

$$\text{Solid content [mass\%]}$$

$$= [(\text{mass after two hours of drying at } 100°\text{C})/(\text{mass of}$$

$$\text{latex before drying})] \times 100$$

Polymerization conversion rate [%] = [(amount of polymer generated/amount of monomers charged)] $\times$ 100

Here, the amount of the polymer generated was determined by subtracting a solid content other than the polymer from a solid content after polymerization.

[Examples 2 to 9 and Comparative Examples 1 to 3]

In Examples 2 to 9 and Comparative Examples 1 to 3, sulfur-copolymerized chloroprene latex was prepared in the same manner as in Example 1 except that the amounts of sulfur and O,O-diisopropyl dithiobis(thioformate) were changed to amounts shown in Table 1. In addition, asphalt emulsion compositions were prepared in the same manner as in Example 1 using the prepared sulfur-copolymerized chloroprene latex.

Samples for MSCR measurement were prepared using the obtained asphalt emulsion compositions, and the aggregate-holding property was evaluated. The results are shown in Table 1.

[Table 1]

| | | Example | | | | | | | | | Comparative Example | | |
|---|---|---|---|---|---|---|---|---|---|---|---|---|---|
| | | 1 | 2 | 3 | 4 | 5 | 6 | 7 | 8 | 9 | 1 | 2 | 3 |
| Sulfur | Parts by mass | 0.10 | 0.05 | 0.05 | 0.10 | 0.10 | 0.25 | 0.25 | 0.25 | 0.45 | 0 | 0 | 0 |
| O,O-diisopropyl dithiobis(thioformate) | Parts by mass | 0.15 | 0.30 | 0.25 | 0.30 | 0.25 | 0.09 | 0.06 | 0.08 | 0.00 | 0.45 | 0.35 | 0.25 |
| Solid content of sulfur-copolymerized chloroprene latex | mass% | 48.0 | 48.3 | 48.1 | 47.5 | 48.6 | 47.8 | 48.1 | 48.3 | 47.2 | 48.5 | 47.3 | 47.8 |
| Content of solid content of sulfur-copolymerized chloroprene latex relative to 100 parts by mass of solid content of asphalt emulsion | Parts by mass | 3.0 | 3.0 | 3.0 | 3.0 | 3.0 | 3.0 | 3.0 | 3.0 | 3.0 | 3.0 | 3.0 | 3.0 |
| Content rate of THF-insoluble gel | mass% | 74 | 31 | 54 | 18 | 47 | 20 | 48 | 60 | 51 | 22 | 52 | 84 |
| Multiple stress creep recovery (MSCR) | % | 31.3 | 25.4 | 21.8 | 26.2 | 28.8 | 27.8 | 25.1 | 21.9 | 24.7 | 14.5 | 15.7 | 15.4 |

It is found that all of the asphalt emulsions of Examples 1 to 9 according to the present invention have an MSCR of more than 20%, which is higher compared with the asphalt emulsions of Comparative Examples 1 to 3, and they have the excellent aggregate-holding property when is made into layered structures.

[Industrial Applicability]

The asphalt emulsion composition according to the present invention can be suitably used in methods for rehabilitating asphalt pavements that have deteriorated and can be used, for example, as an asphalt emulsion for chip sealing, scrub sealing, fog sealing, slurry sealing, or a binder for on-site base course recycling construction.

**Claims**

1. An asphalt emulsion composition comprising: sulfur-copolymerized chloroprene, asphalt and water.

2. The asphalt emulsion composition according to claim 1, further comprising a surfactant.

3. The asphalt emulsion composition according to claim 1 or claim 2, wherein the sulfur-copolymerized chloroprene is a particle.

4. The asphalt emulsion composition according to claim 1 or claim 2, wherein the asphalt is an asphalt particle.

5. A method for producing an asphalt emulsion composition, comprising a step of mixing sulfur-copolymerized chloroprene latex and asphalt.

6. The method for producing an asphalt emulsion composition according to claim 5, wherein the asphalt is an asphalt emulsion.

7. The method for producing an asphalt emulsion composition according to claim 5, wherein the asphalt is an asphalt particle.

8. The method for producing an asphalt emulsion composition according to claim 5 or claim 6, comprising a step of polymerizing the chloroprene monomer in the presence of 0.01 to 5.0 parts by mass of sulfur relative to 100 parts by mass of the chloroprene monomer, and water, thereby obtaining the sulfur-copolymerized chloroprene latex.

9. The method for producing an asphalt emulsion composition according to claim 5 or claim 6, wherein a gel content of the sulfur-copolymerized chloroprene latex is 0 to 90 mass%.

10. The method for producing an asphalt emulsion composition according to claim 5 or claim 6, wherein a content of solid content of the sulfur-copolymerized chloroprene latex relative to 100 parts by mass of solid content of the asphalt is 0.5 to 20 parts by mass.

11. A layered structure comprising an asphalt emulsion composition produced by the production method according to claim 5 or claim 6.

12. An asphalt emulsion composition produced by the production method according to claim 5 or claim 6.

13. The asphalt emulsion composition according to claim 12, wherein the composition forms a sea-island structure when dried.

14. The asphalt emulsion composition according to claim 12, wherein a gel content of the sulfur-copolymerized chloroprene latex is 0 to 90 mass%.

15. The asphalt emulsion composition according to claim 12, wherein a content of solid content of the sulfur-copolymerized chloroprene latex relative to 100 parts by mass of solid content of an asphalt emulsion is 0.5 to 20 parts by mass.

16. A latex composition for modifying asphalt, comprising sulfur-copolymerized chloroprene latex and water.

## INTERNATIONAL SEARCH REPORT

| | International application No. |
|---|---|
| | **PCT/JP2023/027694** |

| A. | CLASSIFICATION OF SUBJECT MATTER |
|---|---|

*C08L 95/00*(2006.01)i; *C08C 19/20*(2006.01)i; *C08L 11/00*(2006.01)i; *C08L 15/00*(2006.01)i
FI:    C08L95/00; C08L11/00; C08L15/00; C08C19/20

According to International Patent Classification (IPC) or to both national classification and IPC

| B. | FIELDS SEARCHED |
|---|---|

Minimum documentation searched (classification system followed by classification symbols)

C08L95/00; C08C19/20; C08L11/00; C08L15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2002-188012 A (DENKI KAGAKU KOGYO KK) 05 July 2002 (2002-07-05) paragraphs [0001], [0028], table 1, polymer 6, table 3, example 6 | 1-16 |
| A | JP 51-115554 A (THE BRITISH PETROLEUM CO LTD) 12 October 1976 (1976-10-12) | 1-16 |
| A | JP 2017-206634 A (DENKA CO LTD) 24 November 2017 (2017-11-24) | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 September 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/027694**

| Patent document cited in search report | | | Publication date (day/month/year) | Patent family member(s) | Publication date (day/month/year) |
|---|---|---|---|---|---|
| JP | 2002-188012 | A | 05 July 2002 | (Family: none) | |
| JP | 51-115554 | A | 12 October 1976 | US 4036799 A | |
| JP | 2017-206634 | A | 24 November 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5180428 B